# FASCICULE DE BREVET EUROPEEN

(11) **EP 2 321 176 B1**
(45) Date de publication et mention de la délivrance du brevet: **28.05.2014**
(21) Numéro de dépôt: 09737034.0
(22) Date de dépôt: 26.08.2009
(51) Int. Cl.: B64D 11/06, B60N 3/00

(54) **SYSTEME DE TABLETTE EXTENSIBLE DE SIEGE, MODULE DE SIEGE ET AERONEF COMPRENANT UN TEL SYSTEME**
AUSZIEHBARES SITZTABLETTSYSTEM, SITZMODUL UND FLUGZEUG MIT EINEM SOLCHEN SYSTEM
EXTENDABLE SEAT TRAY TABLE SYSTEM, SEAT MODULE, AND AIRCRAFT INCLUDING SUCH A SYSTEM

(30) Priorité: 10.09.2008 FR 0856083
(43) Date de publication de la demande: 18.05.2011
(73) Titulaire: Airbus, 31700 Blagnac (FR)
(72) Inventeur: COLLINS, Alexandra, CH-1204 Genève (CH); COLLINS, Mark, CH-1204 Genève (CH)
(74) Mandataire: Le Tourneau, Augustin
(86) Numéro de dépôt international: PCT/FR2009/001034
(87) Numéro de publication internationale: WO 2010/029223

(56) Documents cités:
- EP-A- 1 683 719
- WO-A-2008/031506
- GB-A- 1 151 940
- US-A- 2 805 904
- US-A1- 2001 000 639

## Description

La présente invention se rapporte à un système de tablette prévu pour équiper un siège, notamment d'aéronef, et à un aéronef associé, et plus particulièrement à un tel système comprenant une tablette rétractable dont les dimensions de la surface d'utilisation varient entre la position rétractée de stockage et une position déployée d'utilisation.

Classiquement, la tablette présente une surface plus étendue en position déployée qu'en position rétractée, ce qui permet d'améliorer le confort du passager ou d'un utilisateur tout en limitant l'espace requis pour le stockage de la tablette.

On connaît de telles tablettes sous la forme de tablettes en deux parties repliables l'une sur l'autre à l'aide de charnières, par exemple par la demande de brevet FR 2 905 355.

Les logements pour le stockage de ces tablettes repliées sont notamment prévus dans les accoudoirs des sièges et accessibles en faisant basculer le dessus de l'accoudoir. Les tablettes sont alors stockées en position verticale.

Un inconvénient de ces tablettes réside dans l'espace nécessaire au dépliage manuel des deux parties repliées, généralement un demi cylindre balayé par la partie de tablette tournant autour des charnières. Comme ce volume de dépliement n'est pas disponible dans le logement de stockage, il est nécessaire de procéder au retrait total de la tablette du logement avant d'effectuer le dépliement à proprement parler. Ainsi la surface "utile" de la tablette n'est disponible qu'une fois l'ensemble des manipulations effectué.

Ces manipulations ne sont également pas confortables pour le passager: risque de pincement lors du repliement de la tablette, risque de laisser tomber la deuxième partie lors du dépliement occasionnant des bruits et chocs inutiles, nécessité d'opérer un repliement total et un rangement dans son logement lorsque le passager souhaite s'extirper de son siège.

On connaît également, de la publication EP 1 683 719 qui décrit toutes les caractéristiques du préambule de la revendication 1, une tablette d'avion pivotante prévue sur le dossier d'un siège faisant face au passager. Cette tablette est formée de deux parties, l'une coulissant à l'intérieur de l'autre.

On connaît également, de la publication GB 1 151 940, une table de pique-nique pour voiture présentant un plateau coulissant principal et deux panneaux latéraux coulissants par rapport au plateau principal. Ces deux panneaux latéraux sont rétractés sous le plateau principal lorsque ce dernier n'est pas déployé, puis peuvent être tirés de façon latérale lorsque le plateau principal a été déployé pour utilisation.

La présente invention vise à pallier au moins un des inconvénients de l'art antérieur en proposant un nouveau mécanisme de déploiement de la tablette qui assure l'augmentation de la surface "utile" de la tablette par des manipulations simples et peu encombrantes.

A cet effet, l'invention vise notamment un système de tablette de siège comprenant une tablette présentant une surface supérieure d'utilisation et étant apte à être déplacée selon un axe longitudinal entre au moins deux positions. Le système comprend en outre des moyens de translation aptes à modifier, par translation transversale par rapport à l'axe longitudinal, les dimensions de ladite surface supérieure lors du déplacement de ladite tablette entre au moins deux positions.

Généralement, la première position est celle de stockage de la tablette dans un logement de stockage, alors que la deuxième position correspond à celle d'utilisation pour le passager. Des positions intermédiaires peuvent être cependant envisagées.

Pour le confort du passager, la surface de la tablette est augmentée lors du déploiement de celle-ci, et est réduite lors du rangement de celle-ci.

Ainsi, selon l'invention, seule une translation est mise en oeuvre pour augmenter la surface supérieure "utile" de la tablette. D'une part, une partie de la surface supérieure est accessible dès la sortie de la tablette du logement de stockage, et non uniquement à la fin des opérations de déploiement. D'autre part, la translation assure que les éléments constitutifs de la tablette restent dans un même plan, aucun élément venant balayer un volume au dessus de la tablette. L'encombrement est ainsi réduit.

On remarque en outre que, puisque la surface supérieure de la tablette est accessible jusqu'à son entrée dans le logement de stockage, il n'est plus nécessaire de débarrasser la tablette pour sortir de son siège: il suffit de la pousser jusqu'à l'entrée du logement, si celui-ci est prévu à bonne distance.

En particulier, la translation opérée selon l'invention est parallèle à ladite surface supérieure, généralement horizontale.

Dans un mode de réalisation, lesdits moyens de translation sont couplés à des moyens de déplacement de la tablette de telle sorte que ladite surface supérieure s'étend automatiquement lors du déplacement de ladite tablette entre lesdites deux positions. On entend ici par "couplage" le fait que les moyens de translation sont automatiquement mis en action lorsque les moyens de déplacement sont eux-mêmes mis en action, généralement par une action du passager tirant par exemple la tablette vers lui.

Cette configuration tire profit de la translation mise en oeuvre dans l'invention puisque l'extension de la surface supérieure peut ainsi être menée de concert avec le déplacement de la tablette vers sa position d'utilisation, au contraire du dépliage de l'art antérieur qui nécessite deux manipulations successives faute de place dans le logement.

En choisissant judicieusement le profil d'extension de la tablette fonction de son déploiement de sorte à épouser au plus près les contours du logement de stockage, on peut garantir une utilisation optimale de la tablette lors de toutes les manipulations de celle-ci.

En particulier, les moyens de translation comprennent un doigt apte à s'engager dans une rainure prévue sur un support le long duquel ladite tablette se déplace entre lesdites deux positions. Ainsi, en adaptant le tracé de la rainure, il est aisé d'actionner la translation au fur et à mesure du déplacement de la tablette entre lesdites deux positions. Le doigt et la rainure contribuent ainsi au couplage des moyens de translation avec ceux de déplacement de la tablette.

Selon une caractéristique particulière de l'invention, ladite tablette comprend une première partie de tablette et une deuxième partie de tablette solidaire desdits moyens de déplacement de la tablette le long d'un support, ladite première partie de tablette venant coulisser dans la deuxième partie de tablette.

On comprend ainsi que la première partie, sous l'action des moyens de translation, sort (ou rentre le cas échéant) de l'autre partie dans laquelle elle peut être partiellement stockée. La surface supérieure de la tablette résulte alors de l'addition de la surface supérieure de la deuxième partie avec la surface supérieure de la première partie en position sortie.

En particulier, ladite deuxième partie est de largeur sensiblement égale à la course de translation. On maximise ainsi la surface supérieure plane formée par la première partie. A titre d'exemple, la surface supérieure de la deuxième partie, qui généralement est plus haute que la surface supérieure de la première partie, peut comprendre des emplacements à gobelets.

Selon un mode de réalisation relativement simple des mécanismes de translation, lesdits moyens de translation comprennent deux crémaillères couplées par une roue dentée, les deux crémaillères étant solidaires, respectivement, d'une partie mobile de la tablette et d'un moyen d'actionnement. La partie mobile de la tablette est ici mobile par rapport à la partie de la tablette fixée aux mécanismes de déplacement.

Ainsi, en actionnant la deuxième crémaillère on déplace la première crémaillère, et avec elle, la partie mobile de la tablette (généralement la première partie ci-dessus qui sort alors de la deuxième partie).

Cette réalisation permet d'adapter aisément la course de la partie mobile de tablette en fonction de l'espace de rangement disponible. En effet, à partir d'une même course latérale de la deuxième crémaillère, c'est-à-dire sans changer de moyens d'actionnement, on peut choisir des roues dentées présentant des ratios variables en fonction des utilisations souhaitées.

En particulier, ledit moyen d'actionnement comprend ledit doigt, avec le doigt tel que présenté ci-dessus. Ainsi, en tirant la tablette de son logement de stockage, le doigt est déplacé par la rainure, entraîne la première crémaillère et déploie à son tour la partie mobile de la tablette. Dans ce cas là, ladite roue dentée est montée sur une deuxième partie de tablette solidaire de moyens de déplacement de la tablette le long d'un support, ladite partie mobile de tablette venant coulisser dans la deuxième partie de tablette.

En variante au mécanisme à deux crémaillères, on peut prévoir que le doigt est monté solidaire de la partie mobile de la tablette. Dans ce cas, la course de la tablette est limitée à la course latérale du doigt dans une rainure prévue sur le support.

Dans un mode de réalisation, le système comprend des moyens de déplacement de ladite tablette le long d'un support de siège, lesdits moyens de déplacement comprenant au moins un rail sur ledit support, et un élément mobile solidaire de ladite tablette apte à coulisser sur ledit rail.

Selon une caractéristique particulière de l'invention, la tablette est fixée à des moyens de déplacement de sorte que la surface supérieure de ladite tablette occupe une position sensiblement horizontale dans lesdites deux positions.

Grâce à cette disposition, la tablette peut être maintenue horizontale pendant toute la course de déploiement. Cela permet, d'une part, d'utiliser des mécanismes simples de déplacement entre les deux positions de stockage et d'utilisation, et, d'autre part, de pouvoir utiliser la tablette ou portion de tablette extraite dès le début de sa sortie du logement de stockage.

Ainsi, le passager peut sortir de son siège sans débarrasser sa tablette, en poussant simplement la tablette jusqu'à l'entrée de son logement.

En particulier, on peut prévoir que la tablette est apte à prendre au moins une position intermédiaire entre lesdites première et deuxième positions. Du fait de la position horizontale de la tablette en tout point de son déplacement, la ou les positions intermédiaires peuvent constituer des positions d'utilisation de la tablette.

Selon un mode de réalisation particulier, le système comprend des moyens de guidage de ladite tablette lors de son déploiement, lesdits moyens de guidage étant agencés pour déplacer verticalement ladite surface supérieure entre lesdites deux positions. En particulier, on vise une position rétractée plus haute que la position déployée. Selon l'emplacement de stockage, par exemple en face du passager, la position rétractée haute assure un espace confortable pour les jambes du passager, alors que la position déployée basse peut correspondre à un optimum de confort pour son utilisation par un passager assis.

Dans un mode de réalisation, dans l'une des positions, la tablette, ici référencée comme extensible, est stockée dans un logement prévu dans un meuble présentant, sur sa surface supérieure, une tablette fixe, ladite tablette extensible étant de dimensions sensiblement identiques à ladite tablette fixe de sorte qu'en position stockée, la tablette est sous la tablette fixe. On optimise ainsi l'espace utilisé par ledit meuble: il propose une tablette supérieure fixe et héberge la tablette extensible stockée dont la surface utile est la plus grande possible tout en assurant d'être totalement cachée (par la tablette fixe) en position stockée.

Dans un mode de réalisation, dans lequel, dans l'une des positions, la tablette est stockée dans un logement laissant accessible au moins une partie de la surface inférieure de la tablette, et ladite tablette comprend des moyens de préhension pratiqués dans ladite partie de la surface inférieure de telle sorte qu'un utilisateur peut actionner, par les moyens de préhension, ladite tablette stockée dans le logement. Les moyens de préhension peuvent notamment consister en un trou borgne oblong pratiqué dans l'épaisseur de la tablette.

L'invention vise également un module de siège et un aéronef comprenant un système tel que présenté ci-dessus.

De façon optionnelle, l'aéronef peut comprendre des moyens se rapportant aux caractéristiques de système présentées ci-dessus.

D'autres particularités et avantages de l'invention apparaîtront encore dans la description ci-après, illustrée par les dessins ci-joints, dans lesquels :
- la **figure 1** est une vue de dessus schématique d'un ensemble de modules de siège équipant une cabine d'un aéronef ;
- la **figure 2A** illustre un module de siège en vue de dessus conforme à un mode de réalisation de l'invention, le siège étant en position droite ;
- la **figure 2B** est une vue analogue à la **figure 2A**, le siège étant en position allongée ;
- les **figures 3A** et **3B** sont des vues en élévation d'une colonne de modules de sièges dans un agencement similaire à celui des **figures 2A** et **2B** respectivement;
- la **figure 4** représente un ensemble constitutif d'un module de siège de la **figure 3****,** intégrant une tablette amovible;
- la **figure 5** est une vue de dessus de modules de siège illustrant la tablette de la **figure 4** dans différentes positions;
- la **figure 6A** est une vue de dessous de la tablette de la figure 4, montrant partiellement les moyens de déplacement de la tablette;
- la **figure 6B** illustre les moyens de déplacement de la tablette entre différentes positions d'utilisation;
- la **figure 6C** illustre un moyen de blocage en position de la tablette;
- la **figure 7** représente un exemple de structure générale de la tablette selon l'invention;
- les **figures 8** et **9** illustrent un exemple de mécanisme d'extension de la tablette amovible, respectivement en position rétractée et en position étendue;
- la **figure 10** est une vue explosée des mécanismes d'extension des **figures 8** et **9**; et
- la **figure 11** représente un autre exemple de configuration de cabine pour la mise en oeuvre des modules de siège et tablettes selon l'invention.

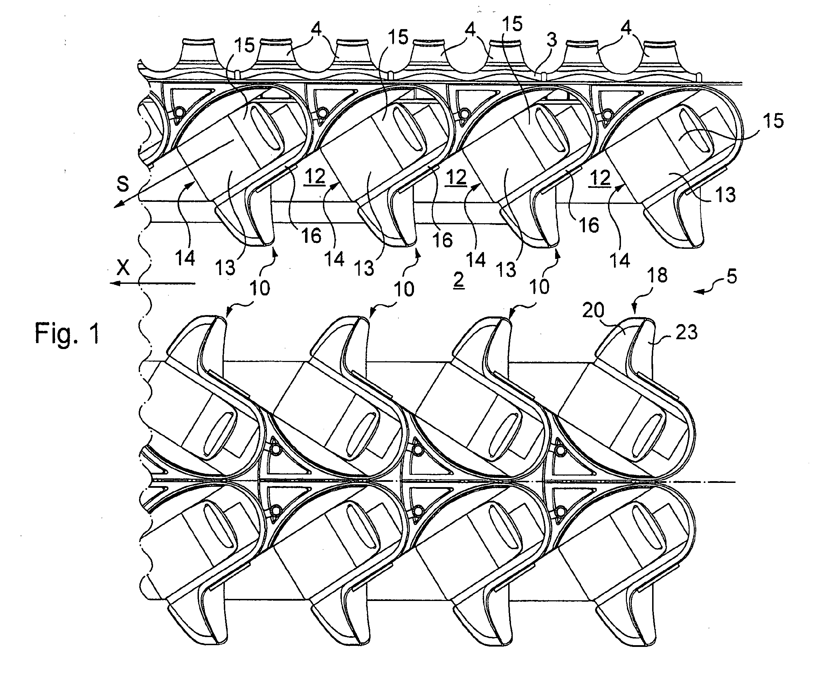

On va décrire tout d'abord en référence à la figure 1, un aménagement de cabine d'aéronef conforme à un mode de réalisation de l'invention.

Comme représenté partiellement à la figure 1, une cabine 1 d'aéronef comporte un plancher 2, des parois latérales, dont une seule 3 pourvue de hublots 4 est représentée, ainsi qu'un plafond, non représenté, pour des raisons de clarté.

La cabine comporte plusieurs modules de siège désignés par la référence générale 10 permettant de créer une place pour chaque passager de l'aéronef.

Chaque module 10 comporte un siège 14 et un panneau de séparation 16 délimitant un espace de vie 12 pour le passager.

Comme bien illustré à la **figure 1**, différents modules de siège pour passager sont implantés, à savoir des modules 10 disposés le long de la paroi 3 de la cabine et des modules 10 disposés en partie centrale de la cabine.

Dans cette partie centrale, les modules de siège 10 sont par exemple implantés par paires.

Entre la partie centrale de la cabine et la paroi 3 de la cabine, les modules de siège 10 sont placés de part et d'autre d'une allée 5, prévue dans la cabine pour la circulation des passagers et du personnel de bord.

Par ailleurs, comme bien illustré à la **figure 1**, les modules de siège 10 sont agencés en quinconce, les uns par rapport aux autres, de part et d'autre de l'allée 5. Cet agencement permet d'augmenter l'effet de masquage produit par les panneaux de séparation 16.

Une colonne de siège le long de l'axe longitudinal X de l'aéronef est formée de modules de siège 10 agencés côte à côte en position relative décalée longitudinalement (c'est-à-dire par rapport à leur axe longitudinal propre S). L'axe longitudinal S des modules de siège 10 forme un angle aigu avec l'axe longitudinal X de l'aéronef, de préférence un angle compris entre 15° et 45°, par exemple 30°, permettant d'augmenter le nombre de modules de siège 10 intégrés dans une même longueur d'aéronef.

Pour la suite de la description, les termes "avant" et "arrière" se référeront à l'axe longitudinal X pour désigner notamment un passager ou un module de siège 10 par rapport à un passager ou module de siège 10 voisin selon cet axe.

Dans chaque module de siège 10, le siège 14 lui-même comporte une assise 13 et un dossier 15, orientés selon l'axe S, permettant de manière classique au passager d'être assis dans le siège 14.

A la **figure 1**, chaque siège est dans une position droite, le dossier 15 du siège 14 s'étendant ainsi sensiblement verticalement par rapport notamment au plancher 2 de l'aéronef.

Bien entendu, cette position droite du siège 14 englobe également les positions intermédiaires du siège dans lesquelles le dossier 15 est légèrement incliné par rapport à l'assise 13, par exemple d'un angle de 20 à 30° par rapport à la verticale.

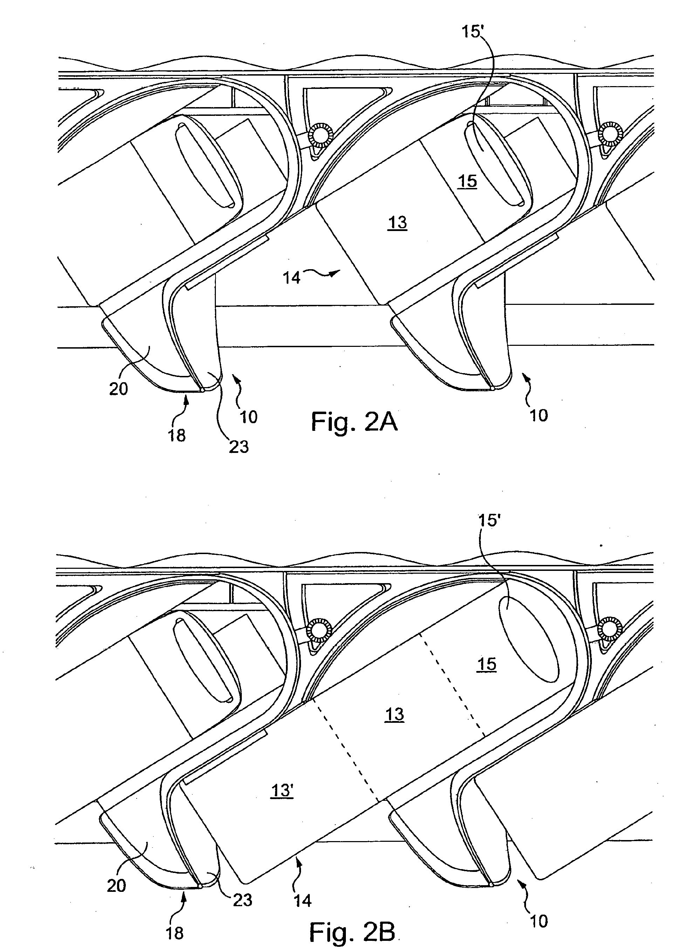

Les **figures 2A** et **2B** illustrent plus en détails un module de siège 10, chaque siège 14 étant mobile entre une position droite (**figure 2A**) et une position allongée (**figure 2B**).

Le mécanisme permettant au siège 14 de passer de la position droite à la position allongée, et vice versa, n'est pas illustré sur les figures. Ce mécanisme peut être un mécanisme quelconque, bien connu de l'homme du métier, permettant de modifier la position du siège.

En particulier, dans la position allongée, le dossier 15 du siège 14 s'étend dans une position sensiblement horizontale, sensiblement dans le même plan que l'assise 13 du siège.

Comme bien illustré sur les **figures 2A** et **2B**, le dossier 15 comporte de préférence un appui-tête 15' constituant, lorsque le siège est en position allongée, un coussin pour la tête du passager allongé sur le siège 14.

Le siège 14 en position allongée, tel qu'illustré à la **figure 2B**, constitue ainsi un lit pour le passager.

Afin d'augmenter la longueur de ce lit, le siège 14 peut en outre comporter une aile 13' dans le prolongement de l'assise 13, adaptée à se déplacer entre une position repliée, sensiblement verticalement, lorsque le siège 14 est en position droite, et une position allongée, sensiblement dans le même plan horizontal que l'assise 13 et le dossier 15 du siège 14 lorsque ce dernier est en position allongée.

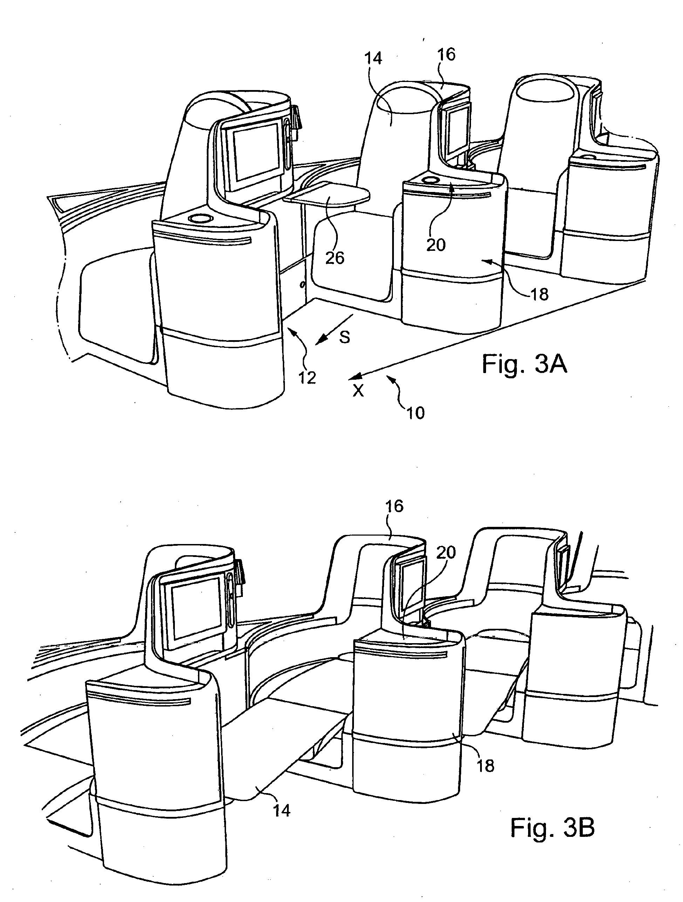

Comme illustré sur les **figures 3A** et **3B**, dans chaque module de siège 10, le panneau de séparation ou coque rigide 16 entoure le siège 14 par les côtés et par l'arrière, et se termine, sur un des côtés, sous la forme d'un caisson 18, ou meuble vertical, surmonté d'une tablette fixe 20 disponible pour le passager.

La partie avant de la zone de vie 12 est délimitée, en face du siège 14 selon l'axe S, par l'arrière du caisson 18 du module avant, et, sur le côté opposé au caisson 18 arrière, par la coque 16 du module avant 10. L'autre côté de la partie avant est laissé libre de sorte à fournir un accès au siège 14 et à l'espace de vie 12.

On notera, ici, que, du fait du décalage relatif des modules de siège 10 entre eux, la tablette fixe 20 est facilement accessible pour le passager avant, au niveau de l'assise 13 notamment, alors que pour le passager arrière, le caisson correspondant est éloigné au niveau des pieds et donc peut pratique.

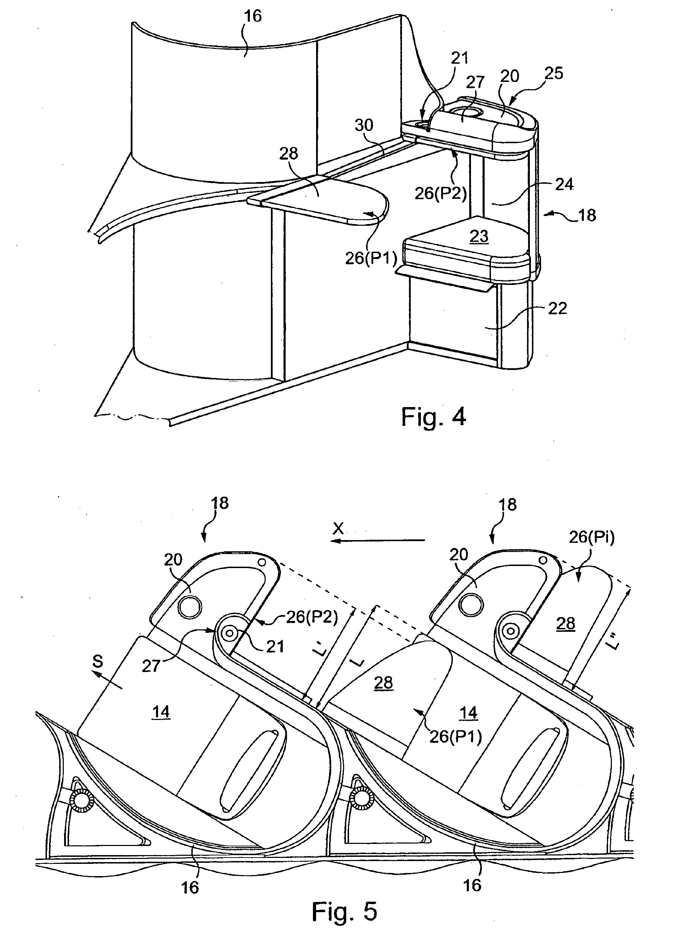

Comme illustré sur la **figure 4**, le caisson 18 délimitant la partie avant de la zone 12 comprend une zone basse 22, une zone intermédiaire 24 et une zone haute 25.

La zone basse 22 est creuse formant forme un espace de rangement pour le passager arrière, fermé par une porte coulissante, comportant éventuellement une serrure.

La zone intermédiaire 24, creuse, forme également un espace de rangement pour le passager arrière lorsque le siège 14 est en position relevée droite ou un espace pour loger les pieds du passager arrière lorsque le siège 14 est en position allongée. La surface inférieure 23 dans ce logement 24 constitue alors une surface de support des pieds pour le passager arrière.

En position allongée, le siège 14 est sensiblement co-planaire avec la surface 23, l'extrémité de l'aile 13' venant par exemple s'appuyer sur le bord de la surface 23.

La partie haute 25 du caisson 18 définit, comme expliqué précédemment, une tablette fixe 20 utilisée par le passager avant. Un rebord 27 de séparation, s'étendant verticalement sur quelques centimètres et le long de la périphérie de la tablette 20 faisant face au passager arrière, permet de cacher le contenu de cette tablette fixe 20 des yeux du passager arrière.

La partie haute 25 du caisson comprend, éventuellement, une portion 21 de tablette fixe pour le passager arrière, par exemple pour poser un gobelet ou une bouteille. Dans ce cas, les deux tablettes fixes 20 et 21 sont séparées par le rebord vertical 27 de séparation.

Sur l'exemple de la **figure 4**, la partie haute 25 du caisson 18 a des dimensions, dans le plan horizontal, identiques à celles de la surface 23 de support pour pieds. On optimise ainsi l'utilisation de la partie avant du module de siège 10, en fournissant la plus grande surface possible pour les tablettes fixes 20 et 21.

En variante, telle qu'illustrée sur les **figures 1**, **2A** et **2B**, la partie haute 25 ne comprend qu'une tablette fixe 20 pour le passager avant et présente des dimensions horizontales inférieures à celles de la surface 23. Notamment, la profondeur de la partie haute 25 parallèlement à l'axe S est réduite par rapport à la profondeur correspondante de la surface 23.

Ainsi, cette dernière 23 dépasse partiellement du meuble caisson 18. Cette partie de surface 23 qui dépasse peut être utilisée, lorsque le siège 14 est en position droite, comme une assise supplémentaire pour un autre passager faisant face au siège 14 dans le module 10. Le rebord de la partie haute 25 faisant face au siège 14 pouvant alors servir de dosseret pour l'autre passager s'asseyant sur l'assise supplémentaire 23 ainsi formée.

En configuration lit, cette partie de surface 23 qui dépasse reçoit, en appui, l'aile 13' pour former le lit (voir **figure 2B**).

Dans un souci de clarté de ces figures, les références sont rapportées que pour un nombre restreint de modules (10) représentés, alors que les éléments correspondant équipent l'ensemble des modules de la cabine.

Les explications qui suivent sur la tablette rétractable peuvent être appliquées indifféremment à l'une ou l'autre de ces deux variantes.

On a représenté, sur la **figure 3A****,** une tablette rétractable 26 (non représentée sur les **figures 1****,** **2A** et **2B****,** mais prévue dans ces configurations) en position déployée, c'est-à-dire surplombant au moins une partie de l'assise 13 du siège 14 pour une utilisation optimum par le passager correspondant. Sur la **figure 3B** la tablette rétractable 26 est dans sa position rangée (non visible).

Sur la **figure 4**, on a représenté la tablette 26 dans ses deux positions extrêmes, à savoir la position totalement déployée P1 pour une utilisation optimale par le passager assis (idem **figure 3A**) et la position totalement rangée P2 où la tablette 26 est logée dans la partie haute du logement 24, et accolée au dessous de la tablette fixe 20 (et éventuellement la tablette fixe 21 lorsqu'elle est prévue).

La tablette 26 en position P2 et la tablette fixe 20 (ou la partie haute 25) présentent des dimensions horizontales similaires, de sorte que la tablette amovible 26 disparaît totalement dans le caisson 18 en position rangée.

Dans ces deux positions P1 et P2, la tablette rétractable 26 présente une surface supérieure 28 horizontale. Cette surface supérieure 28 constitue, dans la position P1, la table utilisée classiquement par un passager.

Un mécanisme de déplacement de la tablette 26, ici représenté par un rail 30 porté par la coque "avant" 16 sensiblement dans le sens longitudinal S, permet de passer de l'une à l'autre des positions, voire de prendre une position intermédiaire, par une translation de la tablette 26 le long du rail. La surface supérieure 28 est alors maintenue horizontale pendant tout le déplacement. Ainsi, le passager peut s'extirper de son siège en poussant simplement la tablette rétractable 26 dans une position intermédiaire vers le caisson 18, sans avoir à débarrasser ses affaires de la tablette 26.

La tablette rétractable 26 selon la présente invention est particulière en ce que, lorsqu l'on déplace la tablette dans le sens longitudinal, sa surface supérieure 28 s'allonge ou se réduit par translation transversale de ses élément. Elle présente alors, dans la position P2, une surface supérieure 28 de dimensions réduites par rapport à la position P1. Ainsi, la tablette 26 prend moins de place au rangement, et fournit une surface "utile" d'utilisation plus grande pour le passager.

Les modules 10 sont ainsi moins larges dans le sens perpendiculaire à X et les allées 5 de l'aéronef sont donc plus spacieuses. On note ici que le caisson 18 étant ainsi moins large que l'assise 13 du siège 14, l'aile 13' une fois dépliée pour former un lit peut dépasser du caisson comme il ressort de la **figure 2B**, sans que cela ne crée une gêne au niveau des allées 5.

En référence à la **figure 5**, la tablette rétractable 26 a une largeur L en position P1 (dimension horizontale perpendiculaire à la direction S, c'est-à-dire la largeur vue par le passager) sensiblement égale à celle du siège 14 (et de l'assise 13).

Le caisson 18 et la tablette rétractable 26 en position P2 présentent une largeur L' inférieure à L, par exemple trois à dix centimètres de moins, en particulier cinq.

On a également représenté une tablette rétractable 26 en position intermédiaire Pi, dans laquelle la surface supérieure 28 est partiellement sortie du logement 24 prévu pour son stockage. La tablette 26 peut être utilisée déjà dans cette position Pi, par exemple comme tablette cocktail pour entreposer des verres.

D'autres positions intermédiaires Pi peuvent être prévues le long du cheminement entre P1 et P2, par exemple une position intermédiaire permettant au passager de s'extirper du siège comme évoqué précédemment et dans laquelle la surface supérieure 28 est totalement hors du logement 24.

Dans la position Pi représentée, la largeur L" de la tablette rétractable 26 est comprise entre L' et L. Comme on le verra par la suite, différents profils régissant la largeur de tablette 26 peuvent être envisagés en fonction du degré d'extraction de la tablette 26 de son logement 24.

Pour optimiser la surface utilisable de la tablette 26, on choisit de préférence un profil qui assure que la largeur de la tablette 26 prend la valeur maximale L dès que toute la surface supérieure 28 est extraite du logement 24.

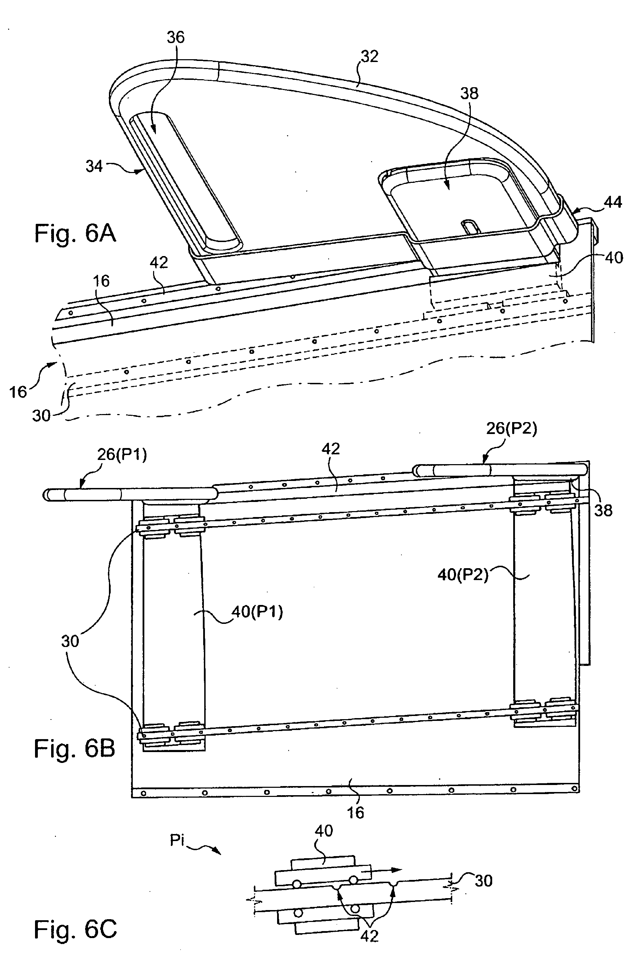

On illustre maintenant le déplacement de la tablette 26 entre les positions P2 et P1 à l'aide des **figures 6A** à **6C****.**

En référence à la **figure 6A****,** la tablette rétractable 26 comprend un plateau principal 32 d'épaisseur réduite, par exemple moins de deux centimètres, qui présente un bord rectiligne 34 s'étendant sur une grande portion de la largeur de la tablette du côté du passager. Depuis le côté de ce bord rectiligne 34, la partie arrière du plateau principal 32 s'entend selon une courbe vers la coque externe 16 qui vient supporter la tablette 26 et son mécanisme de déplacement.

Le caisson 18 a une forme sensiblement similaire à celle du plateau principal 32, de sorte qu'en position rangée P2, la tablette 26 épouse la forme intérieure du caisson 18.

Le plateau principal 32 présente, dans sa face inférieure, un trou borgne 36 de forme oblong s'étendant parallèlement au bord 34 et faisant office de poignée pour le passager souhaitant tirer ou pousser la tablette 26. Le positionnement de la tablette 26 stockée dans la partie supérieure du logement 24 garantit un accès aisé à la poignée 36 pour le passager.

Tout autre moyen de préhension permettant au passager de déplacer la tablette 26 peut être envisagé.

En référence maintenant à la **figure 6B****,** le plateau 32 est fixé à des moyens de déplacement par translation le long d'un ou plusieurs rails 30, ici à une cassette 38 rigide parallèle au plan du plateau 32, elle-même fixée latéralement à un élément mobile 40 sur rail 30, ici une sorte de glissière coulissant ou roulant sur deux rails. La course de déplacement de la tablette entre P1 et P2 est de quelques dizaines de centimètres, généralement entre cinquante centimètres et un mètre, en particulier entre 75 et 80 cm pour offrir un espace de vie 12 confortable au passager.

La fixation de la tablette 26 au travers de la cassette 38 permet de minimiser l'espace occupé sous la tablette par les mécanismes de déplacement, et ainsi accroître le confort du passager dans l'espace 24.

Sous l'effort de traction ou de poussée exercé par le passager sur la poignée 36 selon l'axe S, l'élément mobile 40 coulisse sur les rails 30 permettant de déplacer la tablette 26 qui lui est solidaire entre les différentes positions P1, P2 et Pi.

Les rails 30 et élément mobile 40 sont logés dans l'épaisseur de la coque 16, ici constituée d'une double paroi par exemple. Une fente rectiligne 42 est ainsi prévue pour le passage de la cassette 38 le long du déplacement entre P1 et P2.

Tout moyen de maintien de l'élément mobile 40 dans une des positions Pi peut être prévu. Par exemple sur la **figure 6C**, de légers évidements 42 sont pratiqués dans les rails 30 à des emplacements adaptés. Des roues prévues sur l'élément mobile 40 viennent alors s'engager dans ces évidements 42, bloquant la tablette 26 auxdites positions Pi.

L'effort exercé par le passager sur la poignée 36 permet, le cas échéant, de désengager l'élément mobile de ces évidements pour déplacer la tablette 26 vers une autre position.

Des évidements sont ainsi prévus au niveau des positions P1 et P2, ainsi qu'à une position cocktail P3 dans laquelle la tablette 26 est partiellement (de moitié environ) sortie du logement 24 et à une position P4 à mi-chemin entre P1 et P2 dans laquelle le passager peut s'extraire aisément de son siège.

En variante, les moyens de maintien peuvent être de type à friction prévus sur les roulements de l'élément mobile 40 de sorte que la tablette 26 peut prendre n'importe quelle position le long des rails 30, et non plus uniquement celles créées par les évidements 42. Les moyens de friction assurent le blocage en position de la tablette 26 jusqu'à ce qu'un effort supérieur à un seuil de résistance soit appliqué sur la tablette.

Des moyens appropriés de blocage de la tablette 26 dans ces différentes positions peuvent également être prévus, notamment un verrou manuel bloquant la tablette rétractable 26 dans la position P2 (pour éviter une sortie intempestive lors du décollage de l'aéronef par exemple).

Comme illustré sur la **figure 6B**, les rails 30 et la fente 42 sont légèrement inclinés vers le bas depuis la position rangée P2 vers la position d'utilisation optimale P1. Le dénivelé entre P2 et P1 est de quelques centimètres, en particulier trois ou quatre centimètres.

Ce dénivelé permet de combiner à la fois une hauteur basse P1 optimale pour un passager assis et une hauteur haute P2 dans laquelle la tablette rétractable 26 "colle" au plus près de la tablette fixe 20 de sorte à maximiser l'espace du volume 24 pour accueillir les pieds du passager en position couchée ou pour disposer d'un plus grand espace de stockage.

La cassette 38 est ainsi fixée à l'élément mobile 40 qui la supporte, avec un angle similaire à celui de l'inclinaison des rails 30 par rapport au sol (définissant l'horizontale), de sorte que la tablette 26 reste horizontale dans tout son déplacement. Ainsi, on peut utiliser la tablette 26 selon l'invention alors qu'elle est à peine (partiellement) sortie du logement 24.

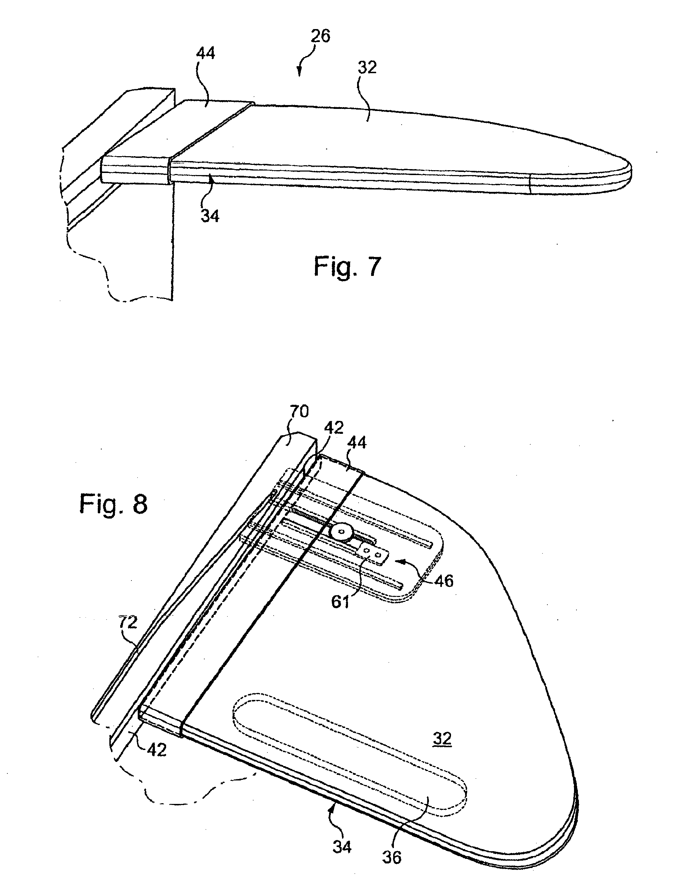

En référence aux **figures 7** à **10**, on décrit maintenant le mécanisme d'extension de la tablette rétractable 26 lorsque cette dernière est tirée hors du logement 24.

La tablette rétractable 26 est formée du plateau principal 32 tel que présenté ci-dessus, et d'un cache 44 s'étendant sur la partie de la tablette 26 adjacente à la coque 16 le long de laquelle elle se déplace.

Le cache 44 est formé d'un ruban peu épais, en plastique rigide entourant le bord du plateau principal 32 et la cassette 38 accolée et partiellement fixée (comme on le verra par la suite) au dessous du plateau principal 32 (voir **figure 6A** également). Le ruban 44 est fixé, par rivetage par exemple, à un boîtier inférieur de la cassette 38.

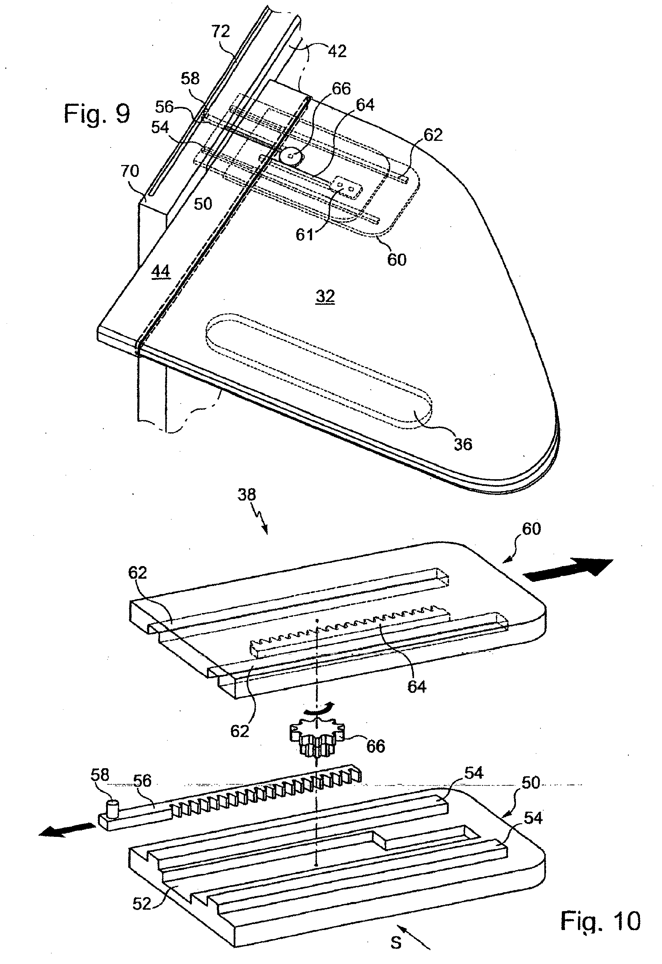

On ne fixe pas le cache 44 au plateau 32 de sorte que ce dernier est libre de coulisser à l'intérieur, notamment entre une position rentrée (comme illustré sur les **figures 6A** et **8** - bord du plateau 32 en pointillés) correspondant généralement à la position P2, et une position étendue (illustrée sur la **figure 9** - bord du plateau 32 en pointillés) correspondant à la tablette en position P1.

C'est cette translation du plateau 32 par coulissement dans le cache 44 qui permet à la tablette 26 d'avoir une surface supérieure utile 28 (comprenant la surface supérieure du ruban 44 et la surface supérieure du plateau 32) de dimension variable.

Afin de garantir une surface supérieure 28 continue entre le ruban 44 et le plateau 32, on choisit un ruban 44 de largeur au moins égale à la course latérale envisagée du plateau 32. Cette course correspond notamment à la différence L-L', soit par exemple cinq centimètres. En particulier, on choisit une largeur de ruban égale à cette course, de telle sorte qu'en position étendue, le bord latéral gauche (sur la figure) du plateau 32 est à l'aplomb du bord droit du ruban 44. On maximise ainsi la surface utilisable du plateau 32 en position totalement déployée P1.

Pour améliorer la planéité de la surface supérieure 28, on peut alors prévoir des moyens élastiques, par exemple des ressorts prévus entre la cassette 38 et le plateau 32 pour rehausser ce dernier de l'épaisseur du ruban 44 lorsque la tablette est étendue. Ainsi les surfaces supérieures du plateau 32 et du cache 44 sont au même niveau. On note ici que des bords latéraux arrondis pour le plateau 32 et le cache 44 permettent de "redescendre", sous un effort de rappel exercé via les moyens de translation tels qu'exposés ci-après, le plateau 32 dans le cache 44 lorsque l'on range la tablette 26 et que le plateau 32 est "rappelé" dans le cache.

Les **figures 8** à **10** illustrent plus précisément les moyens 46 commandant la translation du plateau 32 par coulissement dans le cache 44.

Ces moyens 46 sont ici incorporés dans la cassette 38, de type PVC rigide.

La cassette 38 comprend un demi boîtier inférieur 50 et un demi boîtier supérieur 60 comme représentés en vue explosée sur la figure 10.

Le demi boîtier inférieur 50 est fixé, par vissage à une extrémité, à l'élément mobile 40 depuis lequel il s'étend perpendiculairement à l'axe S. Il est également fixé au cache 44 par rivetage de sorte à entraîner celui-ci lors du déplacement de la tablette 26 par l'élément mobile 40.

Le demi boîtier inférieur 50 comprend également une rainure 52 s'étendant depuis son extrémité fixée à l'élément mobile 40 dans l'axe longitudinal de la cassette 38 (axe horizontal perpendiculaire à S), et deux guides 54 parallèles à la rainure 52 sur une grande longueur de la cassette.

La rainure 52 est prévue pour accueillir les mécanismes de crémaillères introduits ci-après et présente, à cet effet, une largueur variable: large du côté de l'élément mobile 40 pour accueillir deux crémaillères et plus étroit vers l'extrémité opposée pour accueillir une seule crémaillère.

Le demi boîtier supérieur 60 est fixé au dessous du plateau principal 32 de la tablette 26, par exemple par vissage (via une platine 61).

Le demi boîtier supérieur 60 comprend, quant à lui, deux rainures 62 faisant sensiblement face aux deux guides 54. En fermant les deux demi boîtiers 50 et 60 l'un sur l'autre, les guides 54 s'engagent dans les rainures 62 correspondantes. Ainsi, le demi boîtier supérieur 60 et le plateau 32 qui lui est solidaire peuvent coulisser latéralement (perpendiculairement à l'axe S) par rapport au demi boîtier inférieur 50 et à l'élément mobile 40.

Une crémaillère 56 est engagée dans la rainure 52 du demi boîtier inférieur 50 et peut coulisser à l'intérieur dans le sens longitudinal de la cassette 38 (perpendiculairement à S). Un doigt vertical 58 est fixé solidairement à l'extrémité de la crémaillère 56 du côté de l'élément mobile 40.

Une crémaillère correspondante 64 est fixée dans le demi boîtier supérieur 60 et vient dans la rainure 52 lorsque la cassette 38 est fermée.

Les deux crémaillères sont interfacées par une roue dentée 66. Ainsi, lorsque la crémaillère 56 coulisse dans la rainure 52 correspondante, elle entraîne la roue dentée 66 en rotation, qui elle-même entraîne la deuxième crémaillère 64 en translation dans le sens contraire (avec tout le demi boîtier supérieur 60 et le plateau principal 32). Les flèches représentées sur la figure 10 illustrent le mouvement des différentes parties lors de l'extension de la tablette 26 (passage de P2 à P1).

En particulier, la roue dentée 66 a deux étages, l'un s'engageant dans la première crémaillère 56 et l'autre dans la deuxième crémaillère 64 (la rainure 52 étant suffisamment profonde pour accueillir les deux crémaillères 56, 64 chacune au niveau de l'étage respectif de la roue dentée 66). Ainsi, la course de la deuxième crémaillère peut être aisément réduite ou démultipliée en fonction de celle de la première crémaillère. En particulier, on choisit une roue dentée offrant un ratio égal à 2: la course de la crémaillère 56 provoque une course double de la crémaillère 64.

De retour à la **figure 8**, la coque externe 16 comprend une double paroi verticale délimitant un espace interne où est logé le mécanisme de déplacement formé de l'élément mobile 40 et des rails 30. Une paroi perpendiculaire 70 vient fermer la double paroi par le dessus. Cette paroi 70 est notamment parallèle aux rails 30, c'est-à-dire légèrement incliné vers le bas dans la direction du siège 14. La fente 42 prévue pour le déplacement de la cassette 38 est pratiquée dans la paroi externe de la coque 16.

Une rainure 72 non traversante est pratiquée dans la surface inférieure de la paroi 70, dans laquelle vient s'engager le doigt 58 de la cassette 38 lorsque la tablette 26 est montée sur le module 10.

La rainure 72 s'étend sensiblement sur une même longueur que la rainure 42 de déplacement, et s'écarte progressivement de la paroi externe où est pratiquée la rainure 42 dans la direction du siège 14. Notamment, un décalage latéral de 25 mm est prévu entre les deux positions extrêmes.

Ainsi, en tirant la tablette 26 vers le siège 14, la tablette et l'élément mobile 40 coulissent sur les rails 30 vers le siège. En même temps, le doigt 58 est progressivement éloigné, sur 25 mm, de la tablette 26 par la rainure 72, ce qui entraîne la crémaillère 56 dans une translation similaire par rapport au demi boîtier inférieur 50 (et la rainure 52) et entraîne la roue dentée 66 en rotation.

Par le ratio de 2 de la roue 66, la crémaillère 64 translate alors sur une distance double, soit 50 mm, dans le sens contraire, faisant coulisser le plateau 32 hors du cache 44, via la translation du demi boîtier supérieur 60 solidaire du plateau 32 par rapport au demi boîtier inférieur 50 solidaire du cache 44.

Corrélativement, lorsque la tablette 26 est poussée vers le logement de rangement 24, la doigt 58 et la crémaillère 56 translatent progressivement vers la tablette 26. La crémaillère 64 et le plateau 32 translatent alors dans l'autre sens, assurant la rentrée de ce dernier à l'intérieur du cache 44.

En variante de la rainure 72, des rampes de guidage prévues sur la face inférieure de la paroi 70 peuvent être utilisées.

Le profil de la rainure 72 est en particulier choisi pour effectuer le décalage latéral maximal (25 mm dans l'exemple ci-dessus), pour un déplacement de la tablette 26 sur une distance égale à la profondeur du caisson 18 selon l'axe S. De la sorte, la tablette 26 présente une surface utile maximale dès sa sortie du logement 24.

La deuxième partie du profil de la rainure 72 est alors rectiligne, parallèle au déplacement de la tablette 26.

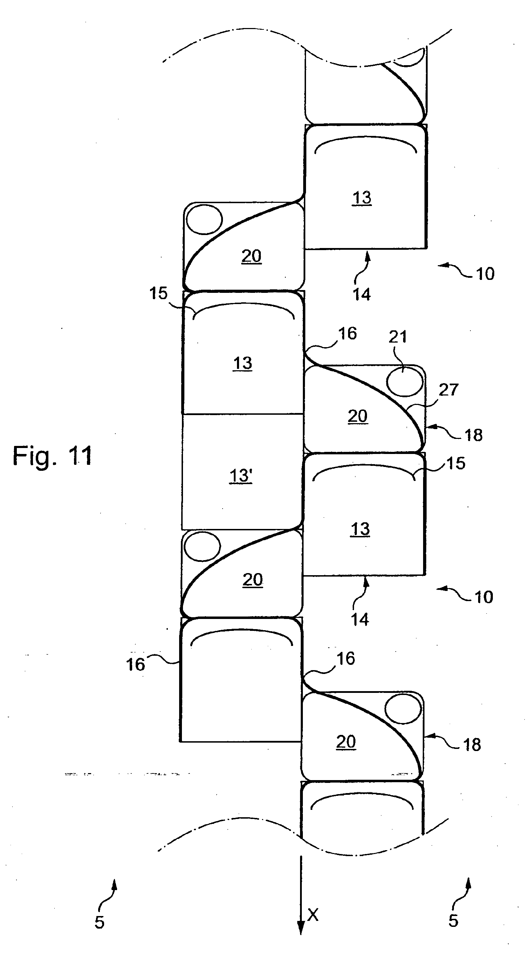

Les modules de siège 10 tels que décrits ci-dessus peuvent également être intégrés dans une configuration de cabine telle que représentée sur la **figure 11**, montrant uniquement un groupe central de modules 10 dans la cabine d'aéronef.

Dans cette configuration, les modules de siège 10 sont alignés les uns derrière les autres, selon l'axe longitudinal X de l'aéronef. Le groupe central est formé de deux colonnes de modules 10 décalés longitudinalement d'une demi longueur de module 10. Ainsi le caisson 18 d'un module 10 offre une tablette fixe 20 au passager voisin, à hauteur de son assise 13. On observe ici que ce n'est pas le passager avant (dans la colonne) qui récupère la tablette fixe 20, mais le passager immédiatement avant dans la colonne voisine.

Les différents types de caisson 18 évoqués précédemment (avec ou sans tablette fixe 21, avec partie du support pour pieds 23 dépassant ou non du caisson 18) peuvent être prévus dans cette configuration, ainsi que les tablettes amovibles 26 telles que décrites ci-dessus.

Dans cette configuration de cabine, seuls les modules 10 du groupe central de cabine récupère ainsi une tablette 20 supplémentaire sur le module voisin. En effet, les groupes latéraux contre le fuselage sont généralement constitués d'un seul module en largeur, ce qui ne permet pas de récupérer une tablette sur un module voisin.

On remarque ainsi que la configuration de cabine représentée notamment en **figure 1**, où les modules font un angle avec l'axe longitudinal X de l'aéronef, permet d'offrir cette tablette supplémentaire à l'ensemble des modules de siège, aussi bien dans les groupes centraux que les groupes latéraux.

Les exemples qui précèdent ne sont que des modes de réalisation de l'invention qui ne s'y limite pas.

En particulier, on peut simplifier le mécanisme de translation du plateau 32 par l'utilisation d'une seule crémaillère solidaire de la partie supérieure 60 de la cassette 38. Le profil de la rainure 72 est alors inversé: elle s'approche progressivement de la paroi externe lors du déplacement vers le siège. Ainsi, le doigt sur l'unique crémaillère, la crémaillère et le plateau 32 sont entraînés solidairement pour faire coulisser ce dernier dans le cache 44.

Par ailleurs, l'invention, bien que décrite ci-dessus dans une application aéronautique, peut être appliquée à tout type de véhicule équipé de siège, par exemple un train, mais également à des modules de siège disposés dans des bâtiments, par exemple dans une salle d'attente ou de repos.

## Revendications

1. Système de tablette de siège comprenant une tablette (26) présentant une surface supérieure d'utilisation (28), ladite tablette (26) étant apte à être déplacée selon un axe longitudinal entre au moins deux positions (P1, P2), **caractérisé en ce qu'**il comprend des moyens de translation (38) aptes à modifier, par translation transversale par rapport à l'axe longitudinal, les dimensions de ladite surface supérieure (28) lors du déplacement de ladite tablette (26) entre au moins deux positions (P1, P2).

2. Système selon la revendication 1, dans lequel lesdits moyens de translation (38) sont couplés à des moyens de déplacement (40, 30) de la tablette (26) de telle sorte que ladite surface supérieure (28) s'étend automatiquement lors du déplacement de ladite tablette (26) entre lesdites deux positions (P1, P2).

3. Système selon la revendication précédente, dans lequel les moyens de translation (38) comprennent un doigt (58) apte à s'engager dans une rainure (72) prévue sur un support (16) le long duquel ladite tablette (26) se déplace entre lesdites deux positions (P1, P2).

4. Système selon la revendication 2 ou 3, dans lequel ladite tablette (26) comprend une première partie (32, 60) de tablette et une deuxième partie (44, 50) de tablette solidaire desdits moyens de déplacement (30, 40) de la tablette le long d'un support (16), ladite première partie (32, 60) de tablette venant coulisser dans la deuxième partie de tablette (44, 50).

5. Système selon l'une des revendications précédentes, dans lequel lesdits moyens de translation (38) comprennent deux crémaillères (56, 64) couplées par une roue dentée (66), les deux crémaillères étant solidaires, respectivement, d'une partie mobile (32) de la tablette et d'un moyen d'actionnement (58).

6. Système selon la revendication précédente, dans lequel ladite roue dentée (66) est montée sur une deuxième partie (44, 50) de tablette solidaire de moyens de déplacement (40) de la tablette (26) le long d'un support (16), ladite partie mobile (32, 60) de tablette venant coulisser dans la deuxième partie (44, 50) de tablette.

7. Système selon l'une des revendications précédentes, dans lequel la tablette (26) est fixée à des moyens de déplacement (40) de sorte que la surface supérieure (28) de ladite tablette occupe une position sensiblement horizontale dans lesdites deux positions (P1, P2).

8. Système selon la revendication précédente, comprenant des moyens de guidage (42) de ladite tablette lors de son déploiement, lesdits moyens de guidage étant agencés pour déplacer verticalement ladite surface supérieure entre lesdites deux positions (P1, P2).

9. Système selon l'une quelconque des revendications précédentes, dans lequel, dans l'une des positions (P2), la tablette (26) est stockée dans un logement (24) prévu dans un meuble (18) présentant, sur sa surface supérieure, une tablette fixe (20), ladite tablette (26) étant de dimensions sensiblement identiques à ladite tablette fixe (20) de sorte qu'en position stockée (P2), la tablette (26) est sous la tablette fixe (20).

10. Aéronef comprenant un système selon l'une quelconque des revendications précédentes.

## Patentansprüche

1. Sitztischsystem, umfassend einen Tisch (26), der eine Nutzungsoberseite (28) aufweist, wobei der Tisch (26) geeignet ist, entlang einer Längsachse zwischen wenigstens zwei Positionen (P1, P2) verlagert zu werden, **dadurch gekennzeichnet, dass** es Verschiebemittel (38) umfasst, die geeignet sind, durch Querverschiebung gegenüber der Längsachse die Abmessungen der Oberseite (28) während der Verlagerung des Tisches (26) zwischen wenigstens zwei Positionen (P1, P2) zu verändern.

2. System nach Anspruch 1, wobei die Verschiebemittel (38) mit Mitteln zur Verlagerung (40, 30) des Tisches (26) derart gekoppelt sind, dass sich die Oberseite (28) während der Verlagerung des Tisches (26) zwischen den beiden Positionen (P1, P2) automatisch erweitert.

3. System nach dem vorhergehenden Anspruch, wobei die Verschiebemittel (38) einen Finger (58) umfassen, der geeignet ist, in eine Nut (72) einzugreifen, die an einem Träger (16) vorgesehen ist, entlang dessen sich der Tisch (26) zwischen den beiden Positionen (P1, P2) verlagert.

4. System nach Anspruch 2 oder 3, wobei der Tisch (26) einen ersten Tischteil (32, 60) und einen zweiten Tischteil (44, 50), der mit den Mitteln zur Verlagerung (30, 40) des Tisches entlang eines Trägers (16) fest verbunden ist, umfasst, wobei der erste Tischteil (32, 60) sich in dem zweiten Tischteil (44, 50) verschieben lässt.

5. System nach einem der vorhergehenden Ansprüche, wobei die Verschiebemittel (38) zwei Zahnstangen (56, 64), die über ein Zahnrad (66) gekoppelt sind, umfassen, wobei die beiden Zahnstangen mit einem beweglichen Teil (32) des Tisches bzw. mit einem Betätigungsteil (58) fest verbunden sind.

6. System nach dem vorhergehenden Anspruch, wobei das Zahnrad (66) an einem zweiten Tischteil (44, 50), der mit Mitteln zur Verlagerung (40) des Tisches (26) entlang eines Trägers (16) fest verbunden ist, angebracht ist, wobei der bewegliche Tischteil (32, 60) sich in dem zweiten Tischteil (44, 50) verschieben lässt.

7. System nach einem der vorhergehenden Ansprüche, wobei der Tisch (26) an Verlagerungsmitteln (40) befestigt ist, so dass die Oberseite (28) des Tisches in beiden Positionen (P1, P2) eine im Wesentlichen horizontale Position einnimmt.

8. System nach dem vorhergehenden Anspruch, umfassend Mittel zum Führen (42) des Tisches bei seinem Ausklappen, wobei die Führungsmittel dazu ausgelegt sind, die Oberseite zwischen den beiden Positionen (P1, P2) vertikal zu verlagern.

9. System nach einem der vorhergehenden Ansprüche, wobei in einer der Positionen (P2) der Tisch (26) in einer Aufnahme (24) aufbewahrt ist, die in einem an seiner Oberseite einen festen Tisch (20) aufweisenden Möbel (18) vorgesehen ist, wobei der Tisch (26) im Wesentlichen identische Abmessungen wie der feste Tisch (20) aufweist, so dass der Tisch (26) sich in der aufbewahrten Position (P2) unter dem festen Tisch (20) befindet.

10. Luftfahrzeug, das ein System nach einem der vorhergehenden Ansprüche umfasst.

## Claims

1. A seat tray table system comprising a tray table (26) having an upper use surface (28), the said tray table (26) being capable of being displaced along a longitudinal axis between at least two positions (P1, P2), **characterized in that** it comprises translation means (38) capable of modifying, by transversal translation relative to the longitudinal axis, the dimensions of the said upper surface (28) during displacement of the said tray table (26) between at least two positions (P1, P2).

2. A system according to claim 1, wherein the said translation means (38) are coupled to means (40, 30) for displacing the tray table (26) in such a way that the said upper surface (28) extends automatically during displacement of the said tray table (26) between the said two positions (P1, P2).

3. A system according to the preceding claim, wherein the translation means (38) comprise a finger (58) capable of engaging in a groove (72) provided on a support (16), along which the said tray table (26) is displaced between the said two positions (P1, P2).

4. A system according to claim 2 or 3, wherein the said tray table (26) comprises a first tray table part (32, 60) and a second tray table part (44, 50) integral with the said means (30, 40) for displacing the tray table along a support (16), the said first tray table part (32, 60) sliding in the second tray table part (44, 50).

5. A system according to one of the preceding claims, wherein the said translation means (38) comprise two racks (56, 64) coupled by a toothed wheel (66), the two racks being respectively integral with a movable part (32) of the tray table and with an actuating means (58).

6. A system according to the preceding claim, wherein the said toothed wheel (66) is mounted on a second tray table part (44, 50) integral with means (40) for displacing the tray table (26) along a support (16), the said movable tray table part (32, 60) sliding in the second tray table part (44, 50).

7. A system according to one of the preceding claims, wherein the tray table (26) is fixed to displacement means (40) in such a way that the upper surface (28) of the said tray table occupies a substantially horizontal position in the said two positions (P1, P2).

8. A system according to the preceding claim, comprising means (42) for guiding the said tray table during its deployment, the said guiding means being arranged to displace the said upper surface vertically between the said two positions (P1, P2).

9. A system according to any one of the preceding claims, wherein, in one of the positions (P2), the tray table (26) is stored in a housing (24) provided in a cabinet (18) having a fixed tray table (20) on its upper surface, the said tray table (26) having dimensions substantially identical to the said fixed tray table (20), in such a way that the tray table (26) is underneath the fixed tray table (20) in stored position (P2).

10. An aircraft comprising a system according to any one of the preceding claims.
